Europäisches Patentamt

European Patent Office

Office européen des brevets

(19)

(11) Veröffentlichungsnummer: **0 068 490**
**A2**

## (12) EUROPÄISCHE PATENTANMELDUNG

(21) Anmeldenummer: 82105747.8

(51) Int. Cl.³: **H 02 B 1/18,** H 02 B 1/08

(22) Anmeldetag: 29.06.82

(30) Priorität: 30.06.81 DE 3125772

(71) Anmelder: **ARCUS ELEKROTECHNIK Alois Schiffmann GmbH, Streitfeldstrasse 15, D-8000 München 80 (DE)**

(43) Veröffentlichungstag der Anmeldung: 05.01.83 **Patentblatt 83/1**

(72) Erfinder: **Schneider, Karl-Wilhelm, Geibelstrasse 15, D-8000 München 80 (DE)**

(74) Vertreter: **Reinländer & Bernhardt Patentanwälte, Orthstrasse 12, D-8000 München 60 (DE)**

(84) Benannte Vertragsstaaten: **AT BE CH FR IT LI NL SE**

(54) **Kabelverteilerschrank.**

(57) In einem Kabelverteilerschrank sind zur Verringerung der Tiefe des Schranks die Sammelschienen, die Sicherungsanschlüsse und die Kabelenden in der Seitenansicht des Schranks gesehen über, unter, vor, hinter und zwischen den Sicherungskörpern angebracht.

/

## Kabelverteilerschrank

Die Erfindung befaßt sich mit einem Kabelverteilerschrank gemäß Oberbegriff des Hauptanspruchs.

Bei solchen bekannten Kabelverteilerschränken, die zur Herstellung von Anschlüssen für Verbraucher an das Stromversorgungsnetz und zur Verbindung einzelner Leitungsabschnitte des Versorgungsnetzes dienen, sind an der Rückwand des Schranks Sammelschienen befestigt, auf denen Stromkreisleisten für NH-Sicherungen angebracht sind. Bei dieser Ausbildung kann unter Berücksichtigung der in die Stromkreisleisten eingesetzten NH-Sicherungen eine bestimmte Tiefe des Schranks nicht unterschritten werden.

Es gibt jedoch Anwendungsfälle, bei denen eine besonders geringe Tiefe des Kabelverteilerschranks erforderlich ist. Wird ein solcher Kabelverteilerschrank beispielsweise am Rand des Bürgersteigs aufgestellt, soll möglichst wenig Platz vom Bürgersteig verloren gehen und soll möglichst wenig in das dem Bürgersteig angrenzende Grundstücke eingegriffen werden. In einem anderen Fall wird versucht, einen solchen Kabelverteilerschrank in einer Hausnische unterzubringen.

Der Erfindung liegt die Aufgabe zugrunde, einen Kabelverteilerschrank zu schaffen, der eine minimale Tiefe aufweist. Gelöst wird diese Aufgabe durch die Merkmale des Hauptanspruchs. Weiterbildungen der Erfindung sind in den Unteransprüchen angegeben.

Die Erfindung basiert auf der Erkenntnis, daß die minimale Tiefe des Schranks durch den Durchmesser bzw. die Dicke des Sicherungskörpers gegeben ist. Wenn somit alle anderen Funktionsteile des Kabelverteilerschranks in derselben Ebene, in der die Sicherungskörper liegen, untergebracht werden, wird kein zusätzlicher Raum zwischen Sicherungskörper einerseits und Rückwand und Tür des Schranks
andererseits benötigt, d.h. der Sicherungskörper kann
theoretisch an der Rückwand und an der Tür des Schranks
anliegen. Aus praktischen Gründen, beispielsweise
Toleranzgründen, wird allerdings meistens zumindest
einseitig des Sicherungskörpers ein geringer Abstand
zu dem benachbarten Bauteil des Schranks bestehen.

Auch die Wandstärke des Schranks trägt zur Tiefe bei,
weshalb bei gleicher Festigkeit gegenüber einem Schrank
aus Kunststoff die gemäß einer Weiterbildung der Erfindung
vorgesehene Ausführung in mit Isolierstoff ausgekleidetem
Stahlblech zu einer weiteren Verringerung der Schranktiefe führt.

Die Erfindung wird beispielhaft anhand der Zeichnung
beschrieben, in der sind

Fig. 1    ein Querschnitt des oberen Teils eines Kabelverteilerschranks    einer Ausführungsform der
         Erfindung und
Fig. 2    ein Querschnitt des oberen Teils eines Kabelverteilerschranks einer weiteren Ausführungsform
         der Erfindung.

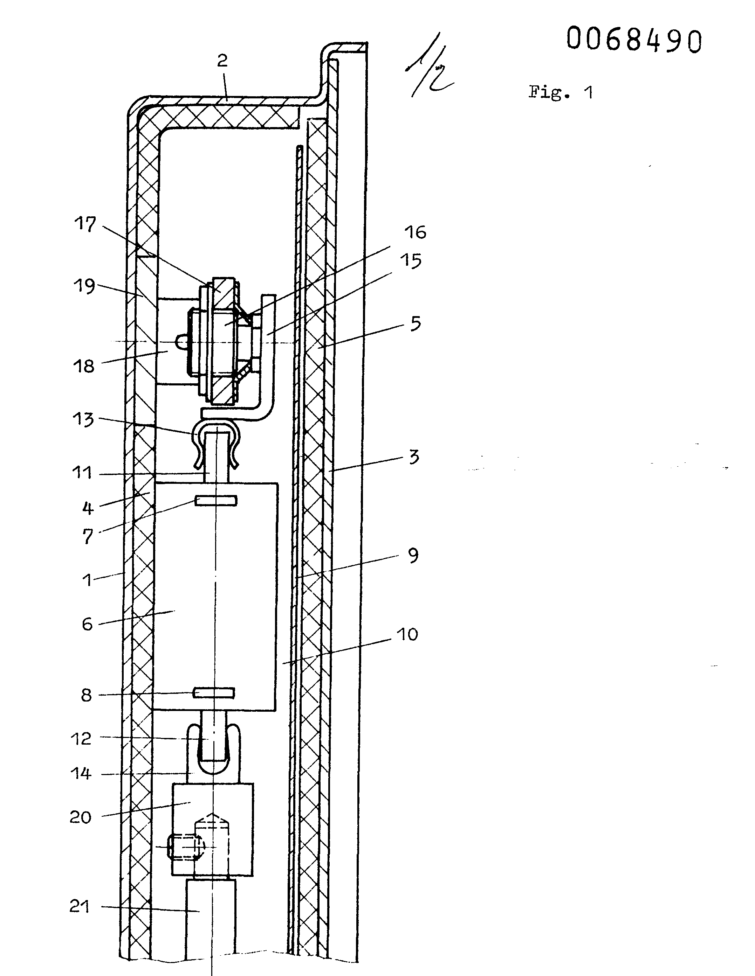

Gemäß Fig. 1 weist der Kabelverteilerschrank eine Rückwand 1,
einen Oberteil 2    und eine Tür 3 aus Stahlblech auf.
Die Stahlblechteile sind innen mit Schichten 4 und 5
aus  Isolierstoff bedeckt. In dem Schrankinnenraum sind
NH-Sicherungskörper, von denen nur ein Sicherungskörper 6
gezeigt ist, untergebracht, und zwar derart, daß der
Sicherungskörper mit der minimalen Breite zwischen der
Rückwand und der Tür des Schranks liegt, also die
Anschlußlaschen 7 und 8 in der Ebene des Schranks liegen.
Der Sicherungskörper 6 liegt bündig an der Isolierstoffschicht 4 der Rückwand an, während an der der Tür zugewandten Seite eine der Berührungssicherheit dienende, d.h. die Spannung führenden Teile abdeckende Isolierstoffplatte 9 angebracht ist, zwischen der und dem Sicherungskörper 6 nur ein geringer Zwischenraum 10 vorhanden ist. Die Kontaktmesser 11 und 12 des NH-Sicherungskörpers 6 sind in unterhalb und oberhalb des Sicherungskörpers 6 angeordnete Federkontakte 13 und 14 eingesteckt. Der Federkontakt 13 ist über ein Winkelstück 15 mit einem Stecker 16 verbunden, der in ein Loch in der Sammelschiene 17 einführbar ist. Die Sammelschiene ist über einen Isolierklotz 18 an der Rückwand 1 des Schranks befestigt, wobei im Bereich des Fußes 19 des Isolierklotzes die Isolierstoffschicht 4 ausgespart ist. Mit dem Federkontakt 14 ist über einen Verbinder 20 das Ende 21 eines Kabelleiters eines Verbraucherkabels verbunden. Der Anschluß eines Kabelleiters eines ankommenden Netzkabels an die Sammelschiene 17 ist nicht im einzelnen dargestellt, wobei auch nicht dargestellt ist, daß an der Sammelschiene mittels Steckverbindungen weitere Sicherungen mit angeschlossenen Verbraucherleitern anbringbar sind. Die dargestellte Anordnung von Kabelleiter, Anschlüssen, Sicherungskörper und Sammelschiene wiederholt sich in der Höhe des Kabelverteilerschranks für die verschiedenen Phasen des Netzes. Bei der dargestellten Ausbildung erfolgt somit der Anschluß eines Verbraucherkabels an der Sammelschiene nicht mittels festmontierter Anschlüsse und insbesondere auch nicht mittels Kabelschuhen, sondern durch eine freibewegliche Anordnung, die mittels Steckverbindungen lösbar und somit einfach montierbar und auswechselbar ist.

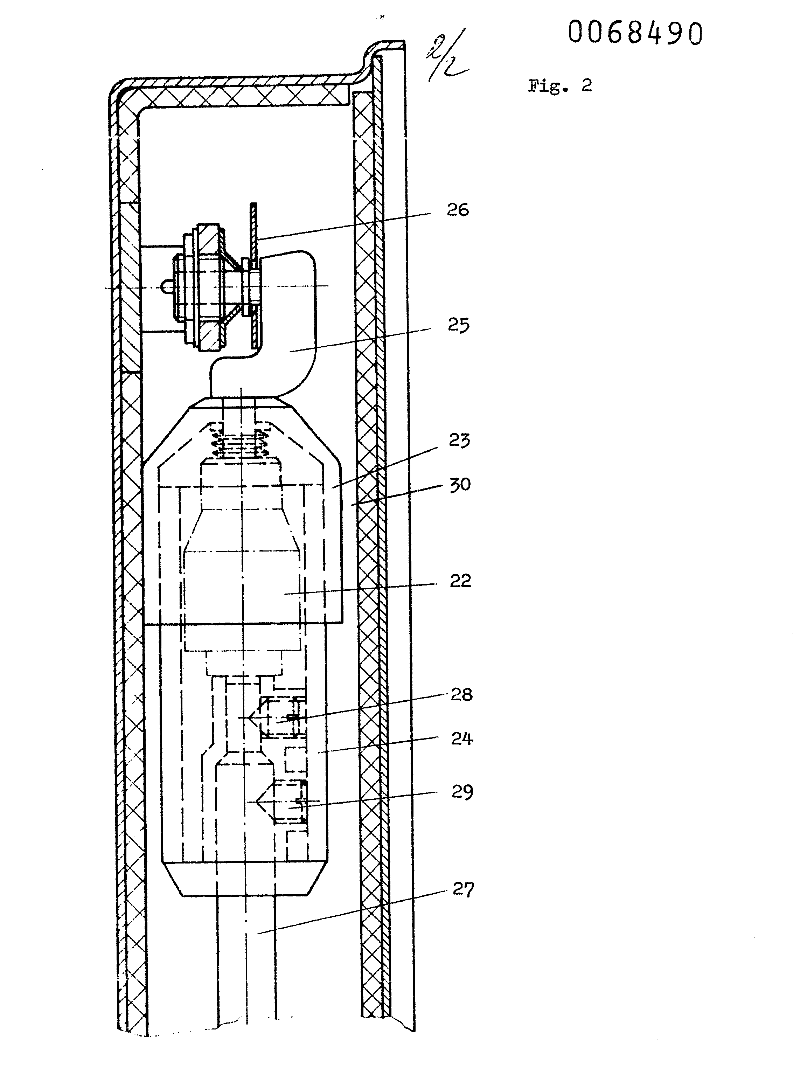

Bei der Ausführungsform der Fig. 2 ist der Sicherungskörper ein eine Schraubsicherung 22 aufnehmendes Isolierstoffgehäuse aus den Teilen 23 und 24. Der Winkel 25 des oberen Anschlusses der Sicherung ist von Isolierstoff umgeben und mit einer die Sammelschiene abdeckende Isolierstoffplatte 26 als Berührungsschutz versehen. Das Ende 27 des Kabelleiters ist direkt in den Teil 24 des Isolierstoffgehäuses eingeführt und darin mittels Madenschrauben 28 und 29 befestigt und kontaktiert. Die Tiefe des Schranks ist bei dieser Ausführungsform durch den Durchmesser des Teils 23 des Isolierstoffgehäuses gegeben, wobei lediglich ein geringer Abstand 30 zwischen diesem Teil und der Isolierschicht der Tür freibleibt. Da bei dieser Ausführungsform die Sicherung und deren Anschlüsse in dem Isolierstoffgehäuse untergebracht sind bzw. gesondert isoliert sind, erübrigt sich eine durchgehende Isolierstoffplatte zur Berührungssicherheit, wie sie bei der Ausführungsform der Fig. 1 als Teil 9 vorgesehen ist.

ARCUS ELEKTROTECHNIK
Alois Schiffmann GmbH
Streitfeldstraße     15
8000   München      80


A n s p r ü c h e

1. Kabelverteilerschrank mit einer Tür, mit an der Rückwand des Schranks angebrachten Sammelschienen und mit in dem Innenraum des Schranks gehaltenen Sicherungen, wobei die Sammelschienen und die Anschlüsse der Sicherungen mit in den Schrank eingeführten Kabelleiterenden verbunden sind,
dadurch gekennzeichnet, daß die Sammelschienen (17), die Sicherungsanschlüsse (13, 14, 15; 25, 28, 29) und die Kabelenden (21; 27) in der Seitenansicht des Schranks gesehen nur über, unter, vor, hinter bzw. zwischen den Sicherungskörpern (6; 22, 23, 24) angebracht sind.

2. Kabelverteilerschrank nach Anspruch 1, dadurch gekennzeichnet, daß der Sicherungskörper (6) eine NH-Sicherung ist, deren Kontaktmesser (11, 12) in mit einer Sammelschiene (17) und einem Kabelleiterende (21) verbundenen Anschlüssen (13, 14, 15, 20) gehalten sind, die in der Seitenansicht des Schranks gesehen über und unter dem Sicherungskörper angebracht sind.

3. Kabelverteilerschrank nach Anspruch 2, dadurch gekennzeichnet, daß der Sicherungskörper (6) und die Anschlüsse (13, 14, 15, 20) durch eine dünne Isolierstoffplatte (9) zur Tür (3) des Schranks abgedeckt sind.

- 2 -

0068490

4. Kabelverteilerschrank nach Anspruch 1, dadurch gekennzeichnet, daß der Sicherungskörper ein eine Schraubsicherung (22) aufnehmendes zylinderförmiges Isolierstoffgehäuse (23, 24) ist, in dessen einen Sicherungsanschluß (28, 29) ein Kabelleiterende (27) eingeführt ist.

5. Kabelverteilerschrank nach einem der Ansprüche 1 bis 4, dadurch gekennzeichnet, daß der eine Anschluß (13, 15) für den Sicherungskörper (6) mit einem Stecker (16) zum Anschließen und Halten an einer Sammelschiene (17) verbunden ist.

6. Kabelverteilerschrank nach einem der Ansprüche 1 bis 5, dadurch gekennzeichnet, daß der Schrank (1, 2, 3) aus Stahlblech besteht, das an der Innenseite mit Isolierstoff (4, 5) ausgekleidet ist.

0068490

Fig. 2